# EUROPÄISCHE PATENTSCHRIFT

(11) **EP 2 409 458 B1**
(45) Veröffentlichungstag und Bekanntmachung des Hinweises auf die Patenterteilung: **09.01.2013**
(21) Anmeldenummer: 10712324.2
(22) Anmeldetag: 18.03.2010
(51) Int. Cl.: H04L 12/437, H04L 12/40

(54) **PARALLELBETRIEB VON RSTP (RAPID SPANNING TREE PROTOCOL) UND MRP (MEDIA REDUNDANCY PROTOCOL) UND SEGMENTIERUNG/KOPPLUNG**
PARALLEL OPERATION OF RSTP (RAPID SPANNING TREE PROTOCOL) AND MRP (MEDIA REDUNDANCY PROTOCOL) AND SEGMENTATION/COUPLING
EXPLOITATION EN PARALLÈLE DE PROTOCOLES RSTP (RAPID SPANNING TREE PROTOCOL) ET MRP (MEDIA REDUNDANCY PROTOCOL) ET SEGMENTATION/COUPLAGE

(30) Priorität: 18.03.2009 DE 102009013416
(43) Veröffentlichungstag der Anmeldung: 25.01.2012
(73) Patentinhaber: Hirschmann Automation and Control GmbH, 72654 Neckartenzlingen (DE)
(72) Erfinder: KLEINEBERG, Oliver, 73240 Wendlingen (DE); MOHL, Dirk, 73733 Esslingen (DE); MÜLLER, Henri, 72764 Reutlingen (DE)
(74) Vertreter: Greif, Thomas
(86) Internationale Anmeldenummer: PCT/EP2010/001702
(87) Internationale Veröffentlichungsnummer: WO 2010/105828

(56) Entgegenhaltungen:
- WO-A1-2008/037781
- WO-A2-03/073703
- DE-A1- 10 354 712

## Beschreibung

Die Erfindung betrifft ein Verfahren zum Betreiben eines Netzwerkes, insbesondere eines Ethernet-Netzwerkes mit Redudanz-Eigenschaften, wobei das Netzwerk insbesondere eine Ring-Netzwerktopologie aufweist, in der Netzwerkgeräte mit ihren Datenports über Datenleitungen miteinander verbunden sind und mit Hilfe von Protokollen Steuerungsdaten sowie Nutzdaten über die Datenleitungen austauschen, wobei die Protokolle, die Vermittlung von Netzwerkverkehr über bestimmte Datenports einzelner Netzwerkgeräte mit Ausnahme von Netzwerkverkehr zur Steuerung und/oder Überwachung der Medienredundanz unterbinden, um ein endloses Kreisen von Netzwerkverkehr in physikalischen Maschen des Netzwerkes zu vermeiden.

Es handelt sich somit insbesondere um eine Erfindung für Ethernet-Switche in Netzwerken. Weiterhin insbesondere betrifft die Erfindung Switche in Netzwerken mit besonderen Umgebungsbedingungen. Auf den Einsatz bei Switchen muss die Erfindung jedoch nicht beschränkt sein, allerdings ist sie hier vorzugsweise anwendbar. Daher wird im Folgenden auf den Einsatz der Erfindung bei Switchen eingegangen, obwohl sie allgemein bei den vorstehend genannten elektronischen Geräten einsetzbar ist, die mit mindestens zwei Netzwerkzugängen (Datenports) an ein Netzwerk angeschlossen sind.

Stand der Technik sind heute im Bereich der Ethemet-Netzwerke eingesetzte Protokolle, die eine Medienredundanz ermöglichen, obwohl die der Netzwerkübertragung zugrunde liegende Technologie, das Ethernet, aufgrund der Rundrufcharakteristik (Broadcasttopologie) normalerweise nicht in der Lage ist, mit vermaschten Netzwerken (Ringtopologie) zu arbeiten.

Die Protokolle RSTP und MRP sind bekannt. RSTP ist in "IEEE 802.1D-2004: 802.1D IEEE Standard for Local and metropolitan area networks" spezifiziert, MRP ist spezifiziert in "Draft IEC 62439-2 INDUSTRIAL COMMUNICATION NETWORKS HIGH AVAILABILITY AUTOMATION NETWORKS; Part 2: Media Redundancy Protocol (MRP)", der generelle Mechanismus zum Betrieb eines Ringredundanzprotokolls auf Ethernet Basis ist aus der WO99/046908 (Lokales Netzwerk, insbesondere Ethemet-Netzwerk, mit Redundanzeigenschaften und Redundanzmanager) bekannt.

Das MRP-Protokoll wird im Folgenden beispielhaft für Ethernet-Ringredundanzprotokolle verwendet. Die Verfahren sind ebenso gültig für andere Ringredundanzprotokolle wie beispielsweise der Fast-HiPER-Ring von der Firma Hirschmann oder ähnliche.

Das RSTP-Protokoll löst Schleifen in der Netzwerktopologie auf, indem es einzelne Verbindungspunkte (z.B. Netzwerkports, an denen Netzwerkgeräte angeschlossen sind) zwischen den Netzwerkgeräten (auch Netzwerkinfrastrukturgeräte genannt, wie zum Beispiel Ethernet-Switche, Router und dergleichen) administrativ blockiert und die Maschentopologie in einen Baum mit dem am höchsten priorisierten Netzwerkgerät als Wurzel (Root-Bridge) auflöst.

Das MRP-Protokoll beschränkt sich bei den unterstützen Netzwerktopologien (im Gegensatz zu RSTP) auf eine reine Ringstruktur und kann deshalb im Gegensatz zu RSTP mit einem bezüglich Determinismus der Rekonfigurationszeit optimierten Verfahren arbeiten.

Beiden Protokollen gemein ist, dass sie die Vermittlung von Netzwerkverkehr über bestimmte Ports (auch Datenports genannt) einzelner Netzwerkgeräte mit Ausnahme von Netzwerkverkehr zur Steuerung/Überwachung der Medienredundanz unterbinden, um ein endloses Kreisen von Netzwerkverkehr, sogenannte Loops bzw Schleifen und/oder Broadcaststorms, in physikalischen Maschen zu vermeiden.

Hierzu benötigt allerdings ein Protokoll einen exklusiven Zugriff auf Ressourcen eines Netzwerkinfrastrukturgerätes, nämlich dessen Netzwefkportverwaltung, um diese Ports für den normalen Netzwerkverkehr bei Bedarf aktivieren und deaktivieren zu können.

Zwischen beiden Protokollen existieren jedoch keine Schnittstellen, weswegen beide Protokolle nur vollkommen autark voneinander arbeiten können. Bisher ist nicht gewährleistet, dass bei einem gemeinsamen Betrieb beider Protokolle in einem gemeinsamen Netzwerk beide Protokolle problemlos zusammenarbeiten. Für MRP wird zwangsweise gefordert, dass auf den Netzwerkports, an denen MRP arbeitet, RSTP abgeschaltet werden muss, um Probleme zu vermeiden. Es ist bisher ausgeschlossen, dass ein und dasselbe RSTP-Netzwerk an mehr als einen Switch im MRP-Ring angeschlossen werden kann.

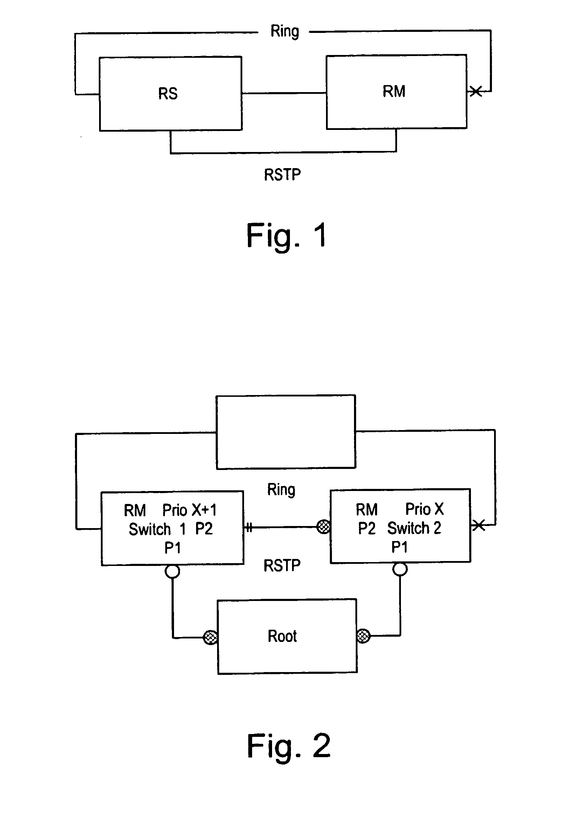

Durch diese Einschränkung kann es bei einer unsachgemäßen Verkabelung zu Schleifen kommen, was in Figur 1 dargestellt ist. Die zusätzlich zur Struktur "Ring" vorhandene RSTP-Verbindung zwischen den beiden symbolisch dargestellten Infrastrukturgeräten RS und RM wird durch das RSTP nicht blockiert und die Schleife nicht aufgelöst, da das Protokoll die Schleife nicht feststellen kann, da es an den Ports, an denen das Ringprotokoll MRP arbeitet, nicht aktiviert ist.

Weiterhin besteht die Gefahr, dass Ports durch ein Redundanzprotokoll administrativ blockiert werden, während andere Protokolle über diesen Port vermitteln wollen.

In Figur 2 ist die RSTP-Root-Bridge mit zwei Switchen in dem Ring verbunden. Die Pfadkosten von den jeweiligen Switchen RS und RM direkt zu der Root-Bridge sind jeweils geringer als jede andere Verbindung zur Root-Bridge. Somit löst das RSTP die entstandene Schleife durch Blockieren der Verbindung zwischen RS und RM auf. Das innerhalb des Ringes konfigurierte Ringredundanzprotokoll hat hiervon unabhängig allerdings bereits selbsttätig einen anderen Ringport blockiert, um die Schleife, die der Ring darstellt, aufzulösen.

Aus der WO 2008/037781 A1 ist ein gattungsgemäßes Verfahren zum Betreiben eines Netzwerkes, insbesondere eines Ethernet-Netzwerkes mit Redudanz-Eigenschaften, bekannt, wobei das Netzwerk insbesondere eine Ring-Netzwerktopologie aufweist, in der Netzwerkgeräte mit ihren Datenports über Datenleitungen miteinander verbunden sind und mit Hilfe von Protokollen Steuerungsdaten sowie Nutzdaten über die Datenleitungen austauschen, wobei die Protokolle, die Vermittlung von Netzwerkverkehr über bestimmte Datenports einzelner Netzwerkgeräte mit Ausnahme von Netzwerkverkehr zur Steuerung und/oder Überwachung der Medienredundanz unterbinden, um ein endloses Kreisen von Netzwerkverkehr in physikalischen Maschen des Netzwerkes zu vermeiden.

Der Erfindung liegt daher die Aufgabe zu Grunde, einen stabilen, parallelen Betrieb von RSTP mit den Ring-Redundanzprotokollen zu ermöglichen, ohne dass unerwünschte Seiteneffekte wie Schleifen oder unerwünschte Blockaden auftreten, die den ordnungsgemäßen Betrieb des Netzwerks verhindern, sowie eine rückwirkungsfreie Kopplung mehrerer Redundanzprotokolle innerhalb einer physikalischen Netzstruktur zu ermöglichen.

Ein weiteres Ziel ist es, dass Umschaltvorgänge in dem einem Teil des Netzwerkes nur Auswirkung auf den betroffenen Teil dieses Netzwerkes haben und sich nicht auf das gesamte Netzwerk, genauer auf weitere angeschlossene Netzwerke, auswirken und dort für diesen Bereich unnötige Unterbrechungen verursachen.

Diese Aufgabe ist durch die Merkmale des Patentanspruches 1 gelöst.

Erfindungsgemäß ist vorgeshen, dass zumindest zwei unterschiedliche Protokolle parallel zueinander in dem Netzwerk auf den Netzwerkgeräten abgearbeitet werden, wobei der parallele Betrieb der zumindest zwei Redundanzprotokolle dadurch ermöglicht wird, dass die Kontrolle über die zu blockierenden Datenports entweder einem einzelnen Redundanzprotokoll zugewiesen wird oder die Parameter für die zumindest beiden Redundanzprotokolle so gewählt werden und/oder die Arbeitsverfahren der Redundanzprotokolle so angeordnet werden, dass durch das eine Redundanzprotokoll keine Verbindungen blockiert werden, die das andere Redundanzprotokoll als aktiv betrachtet.

Das erläuterte Verfahren beschreibt also den Parallelbetrieb zweier Protokolle zur Realisierung von Medienredundanz innerhalb von Ethernet-Netzwerken mit ein- und derselben Netzwerktopologie, sowie eine mögliche Segmentierung und Kopplung mittels zweier Protokolle wobei mindestens eines davon immer ein RSTP-Protokoll oder ein damit verwandtes Protokoll ist.

Der Vorteil der Lösung ist, dass nicht wie bisher nur über eine Verbindung eine RSTP-Topologie angeschlossen kann, sondern über mehrere Verbindungen, so dass dadurch eine Redundanz bei der Kopplung von (redundanten) Netzen erzielt wird. Die erfindungsgemäße Lösung beschreibt drei Verfahren, wie ein Ringredundanzprotokoll und das Rapid-Spanning-Tree-Protokoll über die Festlegung zusätzlicher Parameter so genutzt werden können, dass ein schleifenfreier Parallelbetrieb beider Protokolle möglich wird, sowie ein Verfahren, wie zwei RSTP-Netzwerke so gekoppelt werden können, dass diese sich bei einer Rekonfiguration nicht gegenseitig unnötig beeinflussen.

Ermöglicht wird der parallele Betrieb mehrerer Redundanzprotokolle dadurch, dass die Kontrolle über die zu blockierenden Ports entweder einem einzelnen Protokoll zugewiesen wird oder die Parameter für beide Protokolle so gewählt werden und/oder die Arbeitsverfahren der Protokolle so angepasst werden, dass durch ein Protokoll keine Verbindungen blockiert werden, die das andere Protokoll als aktiv betrachtet. Somit werden alle durch den Parallelbetrieb entstehenden Risiken minimiert, durch im Netzwerk kreisende Datenrahmen die Vermittlungsfähigkeit zu verlieren. Eine Kopplung zwischen Netzen mit Redundanzprotokollen wird dadurch realisiert, dass für ein Protokoll an den Kopplungsschnittstellen feste Parameter definiert werden, die den fehlerfreien Betrieb innerhalb eines jeweiligen Netzes oder Netzsegmentes sicherstellen.

### Ringredundanzprotokoll und RSTP:

Nachfolgend ist das Protokoll MRP als Beispiel für ein Ethernet-Ringredundanzprotokoll gegeben. Das Verfahren beschränkt sich jedoch nicht auf die Anwendung mit MRP, sondern kann auf alle Ringredundanzprotokolle angewendet werden, die einem ähnlichen oder gleichen Arbeitsschema folgen.

### Parallelbetrieb MRP und RSTP mit Vorrang für MRP:

Die Idee ist, dass das RSTP-Protokoll seine Steuerpakete vollständig über den Ring überträgt, sich der Ring für RSTP aber immer als Linie darstellt.

Dies wird dadurch erreicht, dass das RSTP-Protokoll an den Ringports eingeschränkt wird. Zum einen kann das RSTP-Protokoll die Portzustände (Blockieren, Forwarding) nicht verändern, zum anderen verhindert das Ringprotokoll den RSTP-Verkehr vollständig auf dem durch das Ringprotokoll blockierten Ringport auf dem Redundanzmanager.

Hierbei hat das Ringredundanzprotokoll die vollständige Kontrolle über die Ringports, während RSTP keine Kontrolle hat. Das Verhindern des Blockierens der Ringports durch das RSTP-Protokoll wird durch den Mechanismus erreicht, das die Datenframes, die das RSTP zur Information versendet, die sogenannten BPDUs (Bridge Protocol Data Units), über den blockierten Ringport nicht vermittelt werden. Somit wird diese Verbindung für das RSTP unsichtbar und kann nicht mehr blockiert werden oder als für höheren Protokollverkehr als durchlässig angesehen werden.

Da RSTP wie beschrieben keine Kontrolle über die Ringports haben darf, muss sichergestellt werden, dass ein angeschlossenes RSTP-Netz nie bewirken kann, dass ein Ringport bezüglich der RSTP-Schleifenauflösung blockiert werden muss. Das wird dadurch sichergestellt, dass alle im Ring enthaltenen Switche immer mit einer höhere Priorität konfiguriert werden als alle an den Ring angeschlossen Switche und dass alle Ringverbindungen die besten Pfadkosten im Netzwerk haben, was dem Wert 0 entspricht. Schleifenfreiheit wird dadurch erreicht, dass "nicht"-Ringports von RSTP nie eine andere Rolle als "designated" zugewiesen bekommen.

Der Vorteil dieses Verfahrens ist, dass das RSTP über das gesamte Netzwerk läuft, die Rekonfiguration im MRP-Ring aber mit der Geschwindigkeit von MRP abläuft und nicht von RSTP abhängig ist.

### Kopplung MRP und RSTP mit Rückwirkungsfreiheit zwischen den Protokollen:

Bei dieser Lösung wird der MRP-Ring als Backbone verstanden. Das besondere an diesem Verfahren ist, dass eine Umschaltung im Backbone keine Umschaltung in den angeschlossenen RSTP-Strukturen verursacht. Des Weiteren gelten für das Backbone die RSTP-Einschränkung bzgl. Ausdehnung nicht mehr.

Mit dieser Lösung ist nun ein uneingeschränkter RSTP-Betrieb an allen Switchen des Rings möglich, so dass auch ein RSTP-Netzwerk an mehr als einen Ringswitch angeschlossen werden kann. Dabei werden Topologieänderungen bei Bedarf an das Ringnetzwerk weitergeleitet. Die Umschaltgeschwindigkeit des Ringes ist dabei völlig unabhängig von RSTP und wird ausschließlich durch das Ringredundanzprotokoll bestimmt.

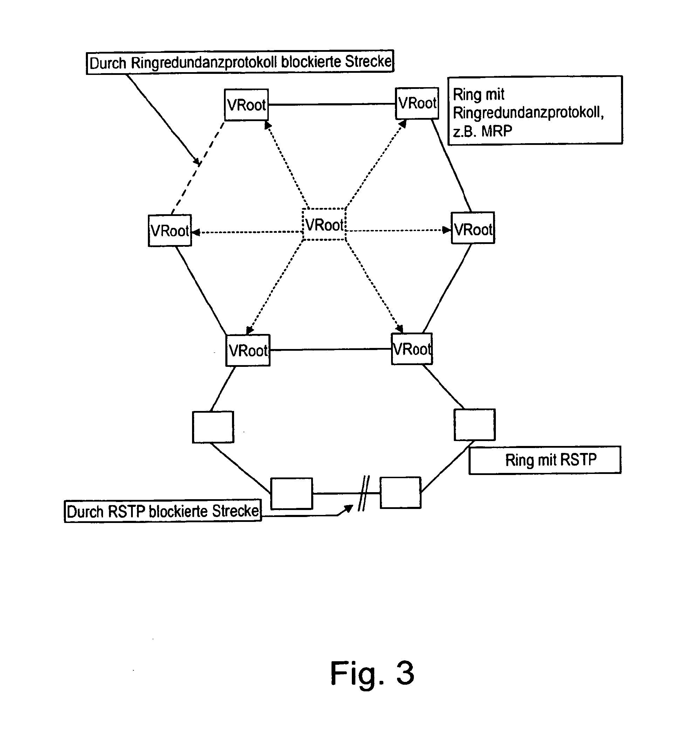

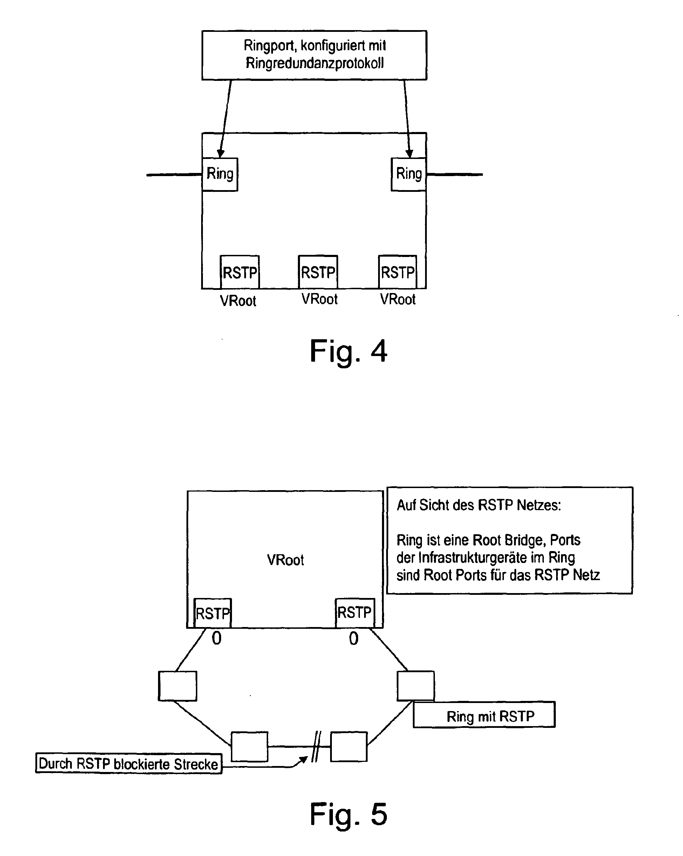

An den Ports der Infrastrukturgeräte innerhalb des MRP-Ringes, an denen ein Ringredundanzprotokoll konfiguriert ist, bleibt das RSTP ausgeschaltet. Für alle Ports an Infrastrukturgeräten des MRP-Ringes, die keine Ringports sind, wird RSTP aktiviert. Gleichzeitig wird über alle Infrastrukturgeräte des Ringes ein und derselbe Parametersatz für die Kosten- und Prioritätswerte einer "virtuellen Root-Bridge", in Figur 3 auch "VRoot" genannt, konfiguriert. Dazu zählt auch eine identische Bridge-ID des VRoots. Die Pfadkosten zu dieser Root-Bridge werden an den Ringswitches immer mit identischen Werten übermittelt. Die Priorität dieser VRoot muss besser sein als die Priorität aller in den angeschlossenen RSTP-Netzwerken vorhandenen Geräte. Für ein RSTP-Netzwerk außerhalb des MRP-Ringes stellt sich also jeder Port eines jeden Infrastrukturgerätes als ein Port an einer "optimalen" Root-Bridge dar. Diesbezüglich siehe auch die schematische Darstellung eines solchen Gerätes in Figur 4.

Figur 5 zeigt das in Figur 3 aufgezeigte Netzwerk aus der Sicht des RSTP-Netzes: Der MRP-Ring ist für das RSTP-Netz strukturell eine große, zusammenhängende Root-Bridge.

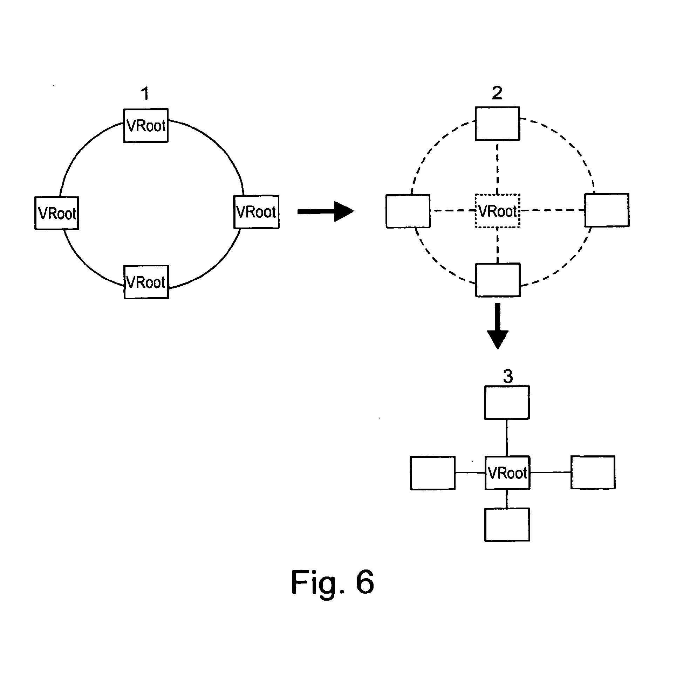

Figur 6 zeigt schematisch in vier Schritten den Übergang von der Ringstruktur mit der virtuellen Root-Bridge, die auf die Ringgeräte angewandt wird (Schritt 1) bis hin zu der virtuellen-Root Bridge, mit der alle Elemente des Rings direkt verbunden sind (Schritt 3) und sich nach außen hin für das RSTP als eine Root-Bridge darstellt. Somit wird sich eine an den MRP-Ring angeschlossene RSTP-Netzstruktur schleifenfrei konfigurieren.

Zu beachten ist, dass bei diesem Verfahren sichergestellt wird, dass sich außerhalb des Backbones keine RSTP-Bridge mit einer besseren Priorität befindet. Das bedeutet auch, dass es in verbunden Netzwerken immer nur einen Backbone gibt.

### RSTP + RSTP:

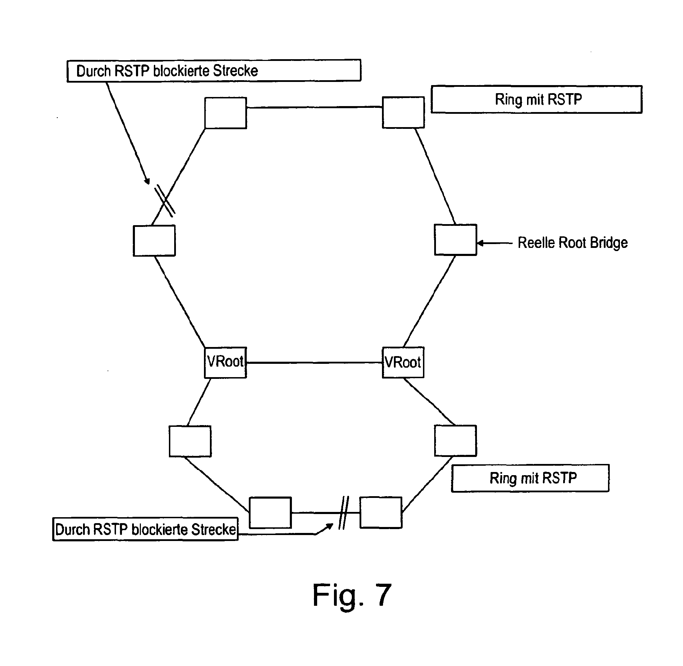

Anstatt eines Ringredundahzprotokolis kann die physikalische Ringstruktur, in Figur 3 mit "Ring mit Ringredundanzprotokoll" bezeichnet, auch mit einem anderen Redundanzprotokoll, wie beispielsweise ebenfalls dem RSTP, konfiguriert werden (siehe hierzu auch Figur 7).

Ziel ist es nun, eine in einer der zwei hier dargestellten Ringen möglicherweise stattfindende Rekonfiguration nicht auf den anderen Ring rückwirken zu lassen, was im Falle eines gemeinsam arbeitenden und von einer Root-Bridge aufgespannten RSTP-Baum möglich wäre.

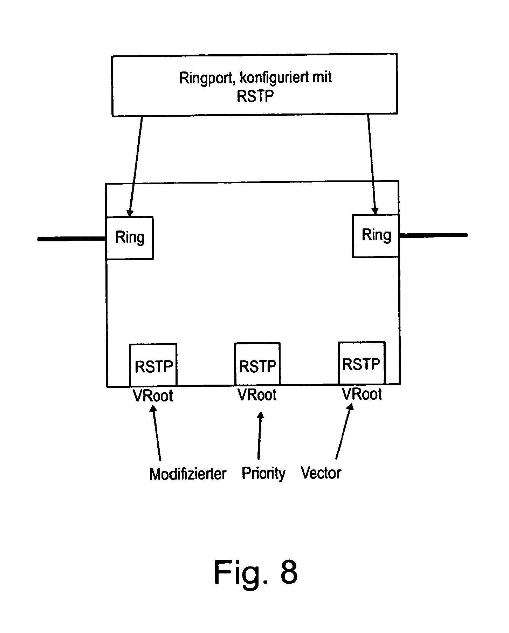

Dies wird dadurch erreicht, dass auf einem Gerät eines Ringes, in dem sich die reale RSTP-Root-Bridge befindet, auf den Ringports das RSTP-Protokoll aktiviert wird. Auf allen Ports, die nicht Ringports sind, wird durch Konfiguration Einfluss auf den übermittelten Spanning Tree Priority Vector genommen und dieser, genau wie bei der bereits vormals erläuterten VRoot, so konfiguriert (keine geringeren Kosten, keine bessere Priorität im angeschlossenen Netz als im Backbone), dass angeschlossene Netzwerke, wie beispielsweise die untere Ringstruktur in Figur 7, diese Ports als direkte Ports zu einer optimalen Root-Bridge annehmen (siehe auch Figur 8). Somit wird die unterliegende Netzwerkstruktur schleifenfrei aufgelöst und Konfigurationsänderungen (z.B. durch Hardwareversagen) in dieser Netzstruktur sind abgekoppelt von anderen Netzstrukturen, beispielsweise der oberen Ringstruktur. Ebenso werden in diesem Fall Topologieänderungen bei Bedarf weitergeleitet.

## Patentansprüche

1. Verfahren zum Betreiben eines Netzwerkes, insbesondere eines Ethernet-Netzwerkes mit Redudanz-Eigenschaften, wobei das Netzwerk insbesondere eine Ring-Netzwerktopologie aufweist, in der Netzwerkgeräte mit ihren Datenports über Datenleitungen miteinander verbunden sind und mit Hilfe von Protokollen Steuerungsdaten sowie Nutzdaten über die Datenleitungen austauschen, wobei die Protokolle, die Vermittlung von Netzwerkverkehr über bestimmte Datenports einzelner Netzwerkgeräte mit Ausnahme von Netzwerkverkehr zur Steuerung und/oder Überwachung der Medienredundanz unterbinden, um ein endloses Kreisen von Netzwerkverkehr in physikalischen Maschen des Netzwerkes zu vermeiden, **dadurch gekennzeichnet, dass** zumindest zwei unterschiedliche Protokolle parallel zueinander in dem Netzwerk auf den Netzwerkgeräten abgearbeitet werden, wobei der parallele Betrieb der zumindest zwei Redundanzprotokolle dadurch ermöglicht wird, dass die Kontrolle über die zu blockierenden Datenports entweder einem einzelnen Redundanzprotokoll zugewiesen wird oder die Parameter für die zumindest beiden Redundanzprotokolle so gewählt werden und/oder die Arbeitsverfahren der Redundanzprotokolle so angeordnet werden, dass durch das eine Redundanzprotokoll keine Verbindungen blockiert werden, die das andere Redundanzprotokoll als aktiv betrachtet.

2. Verfahren nach Anspruch 1, **dadurch gekennzeichnet, dass** eine Kopplung zwischen zumindest zwei Netzwerken mit Redundanzprotokollen dadurch realisiert ist, dass für das zumindest eine Redundanzprotokoll an den Kopplungsschnittstellen zwischen den beiden Netzwerken feste Parameter definiert werden, die den fehlerfreien Betrieb innerhalb des jeweiligen Netzwerkes oder Netzsegmentes sicherstellen.

3. Verfahren nach Anspruch 1 oder 2, **dadurch gekennzeichnet, dass** als Protokolle das Rapid Spanning Tree Protokoll (RSTP) und/oder das Media Redundancy Protokoll (MRP) ausgeführt werden.

4. Verfahren nach Anspruch 1 oder 2, **dadurch gekennzeichnet, dass** als Protokolle dem Rapid Spanning Tree Protokoll (RSTP) und/oder dem Media Redundancy Protokoll (MRP) verwandte oder ähnliche Protokolle eingesetzt werden

5. Verfahren nach einem der vorhergehenden Ansprüche, **dadurch gekennzeichnet, dass** das Rapid Spanning Tree Protokoll seine Steuerpakete vollständig über den Ring der Ring-Netzwerktopologie überträgt, wobei sich dieser Ring für das Rapid Spanning Tree Protokoll als Linie darstellt, dass dadurch erreicht wird, dass das Rapid Spanning Tree Protokoll an den Datenports eingeschränkt wird.

6. Verfahren nach einem der vorhergehenden Ansprüche, **dadurch gekennzeichnet, dass** an den Datenports der Netzwerkgeräte innerhalb des MRP-Ringes, an denen ein Ringredundanzprotokoll konfiguriert ist, das Rapid Spanning Tree Protokoll ausgeschaltet bleibt, wobei für alle Datenports der Netzwerkgeräte des MRP-Ringes, die keine Ringports sind, das Rapid Spanning Tree Protokoll aktiviert und gleichzeitig über alle Netzwerkgeräte des Ringes ein- und derselbe Parametersatz für vorgebbare Werte einer virtuellen Root-Bridge konfiguriert wird.

7. Verfahren nach einem der vorhergehenden Ansprüche, **dadurch gekennzeichnet, dass** auf einem Netzwerkgerät eines Ringes, in dem sich die reale Rapid Spanning Tree Protokoll-Root-Bridge befindet, auf den Ringports das Rapid Spanning Tree-Protokoll aktiviert wird und auf allen Ports, die nicht Ringports sind, durch die Konfiguration Einfluss auf den übermittelten Spanning Tree Priority Vector genommen wird und dieser so konfiguriert wird, dass angeschlossene Netzwerke diese Ports als direkte Ports zu einer optimalen Root-Bridge annehmen.

## Claims

1. Method for operating a network, particularly an Ethernet network having redundancy properties, wherein the network has particularly a ring network topology in which network devices have their data ports connected to one another by means of data lines and use protocols to interchange control data and user data via the data lines, wherein the protocols prevent the mediation of network traffic via particular data ports of individual network devices with the exception of network traffic for controlling and/or monitoring the media redundancy in order to avoid endless circulation of network traffic in physical meshes of the network, **characterized in that** at least two different protocols are executed in parallel with one another in the network on the network devices, wherein the parallel operation of the at least two redundancy protocols is made possible either by virtue of the control over the data ports to be blocked being assigned to an individual redundancy protocol or by virtue of the parameters for the at least two redundancy protocols being chosen, and/or the methods of operation of the redundancy protocols being arranged, such that one redundancy protocol does not block any connections which the other redundancy protocol considers to be active.

2. Method according to Claim 1, **characterized in that** coupling between at least two networks having redundancy protocols is implemented by virtue of fixed parameters, which ensure error-free operation within the respective network or network segment, being defined for the at least one redundancy protocol on the coupling interfaces between the two networks.

3. Method according to Claim 1 or 2, **characterized in that** the protocols executed are the rapid spanning tree protocol (RSTP) and/or the media redundancy protocol (MRP).

4. Method according to Claim 1 or 2, **characterized in that** the protocols employed are protocols related or similar to the rapid spanning tree protocol (RSTP) and/or the media redundancy protocol (MRP).

5. Method according to one of the preceding claims, **characterized in that** the rapid spanning tree protocol transmits its control packets completely via the ring of the ring network topology, this ring presenting itself as a line for the rapid spanning tree protocol, which is achieved by virtue of the rapid spanning tree protocol being restricted to the data ports.

6. Method according to one of the preceding claims, **characterized in that** the rapid spanning tree protocol remains switched off at the data ports of the network devices within the MRP ring which have a ring redundancy protocol configured on them, wherein for all the data ports of the network devices in the MRP ring which are not ring ports, the rapid spanning tree protocol is activated and at the same time all the network devices in the ring are used to configure one and the same parameter set for prescribable values of a virtual root bridge.

7. Method according to one of the preceding claims, **characterized in that** on a network device in a ring which contains the real rapid spanning tree protocol root bridge, the rapid spanning tree protocol is activated on the ring ports and the configuration influences the transmitted spanning tree priority vector on all the ports which are not ring ports and configures said spanning tree priority vector such that connected networks assume these ports to be direct ports for an optimum root bridge.

## Revendications

1. Procédé pour exploiter un réseau, notamment un réseau Ethernet ayant des caractéristiques de redondance, dans lequel le réseau présente notamment une topologie de réseau en anneau dans laquelle des dispositifs de réseau sont interconnectés les uns aux autres par leurs ports de données par l'intermédiaire de liaisons de données et échangent, à l'aide de protocoles, des données de commande ainsi que des données utiles par l'intermédiaire des liaisons de données, dans lequel les protocoles empêchent la transmission d'un trafic de réseau par certains ports de données de différents dispositifs de réseau à l'exclusion du trafic de réseau destiné à la commande et/ou la surveillance de la redondance des supports afin d'éviter des boucles sans fin du trafic de réseau dans des mailles physiques du réseau, **caractérisé en ce qu'**au moins deux protocoles différents sont mis en oeuvre en parallèle dans le réseau sur les dispositifs de réseau, l'exploitation en parallèle des au moins deux protocoles de redondance permettant soit d'affecter le contrôle sur les ports de données à bloquer à un seul protocole de redondance, soit de choisir les paramètres pour les au moins deux protocoles de redondance et/ou d'adapter les procédures de fonctionnement des protocoles de redondance de telle manière qu'un protocole de redondance ne bloque pas de connexions que l'autre protocole de redondance considère comme étant actives.

2. Procédé selon la revendication 1, **caractérisé en ce qu'**un raccordement entre au moins deux réseaux est réalisé au moyen de protocoles de redondance de telle manière que pour l'au moins un protocole de redondance, on définisse sur les interfaces de raccordement entre les deux réseaux des paramètres fixes qui assurent un bon fonctionnement à l'intérieur du réseau ou du segment de réseau respectif.

3. Procédé selon la revendication 1 ou 2, **caractérisé en ce qu'**on utilise en tant que protocoles le protocole RSTP (Rapid Spanning Tree Protocol) et/ou le protocole MRP (Media Redundancy Protocol).

4. Procédé selon la revendication 1 ou 2, **caractérisé en ce qu'**on utilise en tant que protocoles le protocole RSTP (Rapid Spanning Tree Protocol) et/ou le protocole MRP (Media Redundancy Protocol) ou **en ce qu'**on applique des protocoles semblables.

5. Procédé selon l'une quelconque des revendications précédentes, **caractérisé en ce que** le protocole RSTP transmet la totalité de ses paquets de commande par l'intermédiaire de l'anneau de la topologie de réseau en anneau, cet anneau étant représenté sous la forme d'une ligne pour le protocole RSTP, cela étant obtenu en limitant le protocole RSTP aux ports de données.

6. Procédé selon l'une quelconque des revendications précédentes, **caractérisé en ce que** le protocole RSTP reste désactivé à l'intérieur de l'anneau MRP sur les ports de données des dispositifs de réseau sur lesquels un protocole de redondance d'anneau est configuré, dans lequel, pour tous les ports de données des dispositifs de réseau de l'anneau MRP qui ne sont pas des ports d'anneau, le protocole RSTP est activé et un seul et même ensemble de paramètres est configuré simultanément sur tous les dispositifs de réseau de l'anneau pour des valeurs prédéterminées d'un Pont Racine virtuel.

7. Procédé selon l'une quelconque des revendications précédentes, **caractérisé en ce que** le protocole RSTP est activé sur les ports de l'anneau sur un dispositif de réseau d'un anneau dans lequel se trouve le Pont Racine à protocole RSTP réel et, sur tous les ports qui ne sont pas des ports de l'anneau, une influence est exercée par la configuration sur le Vecteur de Priorité de l'Arbre Couvrant transmis et celui-ci est configuré de telle manière que des réseaux raccordés adoptent ces ports en tant que ports directs d'un Pont Racine optimal.
